# FASCICULE DE BREVET EUROPEEN

(11) **EP 0 568 431 B1**
(45) Date de publication et mention de la délivrance du brevet: **05.07.1995**
(21) Numéro de dépôt: 93401068.7
(22) Date de dépôt: 23.04.1993
(51) Int. Cl.: F02C 3/20, F02C 6/10

(54) **Turbine à gaz associé à une unité de séparation de gaz de l'air**
Gasturbine kombiniert mit Lufttrennungsanlage
Gas turbine working in combination with air separation plant

(30) Priorité: 29.04.1992 FR 9205281
(43) Date de publication de la demande: 03.11.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Chretien, Denis, F-94160 Saint Mande (FR); Girault, Jean-Louis, B-4000 Liège (BE); Darredeau, Bernard, F-78500 Sartrouville (FR)
(74) Mandataire: Le Moenner, Gabriel

(56) Documents cités:
- EP-A- 0 081 178
- EP-A- 0 137 152
- EP-A- 0 402 045
- EP-A- 0 465 193
- EP-A- 0 538 118
- DE-A- 1 274 092
- DE-A- 3 706 733
- US-A- 4 557 735
- DATABASE WPIL Section Ch, Week 9105, Derwent Publications Ltd., London, GB; Class E,J, AN 91031185 & EP-A-410831 (AIR LIQUIDE) 30 Janvier 1991
- DATABASE WPIL Section Ch, Week 8608, Derwent Publications Ltd., London, GB; Class E,J, AN 86055173 & EP-A-218 741 (UNION CARBIDE CORP) 22 Avril 1987
- DATABASE WPIL Section Ch, Week 8833, Derwent Publications Ltd., London, GB; Class M24, AN 88232309 & JP-A-63 166 916 (NIPPON KOKAN KK)

## Description

La présente invention concerne les procédés de mise en oeuvre ou d'exploitation d'un groupe turbine à gaz produisant de l'énergie par combustion d'un carburant avec un mélange de gaz de l'air. Un tel procedé est connû par example du document US-A-4,557,735.

Un groupe turbine à gaz comprend un compresseur d'air, un circuit de combustion et une turbine de détente couplée au compresseur pour l'entraînement de ce dernier. Le travail de détente de la turbine étant supérieur à celui de compression du compresseur, il en résulte un solde d'énergie utilisé pour entraîner une machine telle qu'un alternateur. Le travail délivré par la turbine dépend pour une large part de la quantité de fumées générée lors de la combustion et augmente avec cette dernière dans les limites compatibles avec les caractéristiques aérodynamiques, également appelées "l'hydraulique", de la turbine. D'autre part, l'énergie absorbée par le compresseur dépend du débit massique d'air comprimé dans les limites de pompage du compresseur.

Un groupe turbine à gaz représente un investissement considérable qui n'est exploité au mieux que si le compresseur et la turbine travaillent chacun dans des conditions optimales. Cet état optimum est rarement atteint dans la mesure où, en général, l'un des deux éléments est à son optimum de capacité alors que l'autre ne l'est pas, ce que l'on appelle le déséquilibre entre les deux éléments, le cas le plus fréquent étant celui où la turbine est, aérodynamiquement parlant, sur-dimensionnée par rapport au compresseur dont les limites sont plus rapidement atteintes. Un tel déséquilibre peut provenir en outre du carburant utilisé ou des conditions climatiques du site d'utilisation. Ainsi, pour une même énergie thermique libérée, les débits de fumées varient considérablement selon les carburants gazeux. Plus le pouvoir calorifique inférieur (PCI) du gaz est faible, plus le débit de fumées généré est important. Par exemple, la combustion d'un gaz de haut fourneau produira, à énergie thermique identique, un débit de fumées plus important que du gaz naturel, ce dernier présentant d'autre part, selon son origine, des PCI variables. Avec un volume de fumées important, la pression à l'admission de la turbine augmente ainsi que, corrélativement, celle de la pression d'air au refoulement du compresseur. Une telle augmentation de pression peut amener le compresseur à sa limite de pompage. Pour limiter la montée en pression, il suffit de soutirer de l'air comprimé entre la sortie du compresseur et la chambre de combustion. En ce qui concerne les variations des conditions climatiques, la température est le paramètre primordial. Plus la température est élevée, plus la capacité du compresseur diminue. Inversement, plus la température est froide, plus la capacité du compresseur augmente au point de pouvoir éventuellement dépasser les capacités de la turbine d'accepter un débit correspondant de fumées. Il est ainsi fréquent que les conditions d'exploitation d'un même groupe turbine à gaz soient limitées en hiver par la turbine et en été par le compresseur. En analysant ces phénomènes, la Demanderesse a découvert qu'il était possible de rétablir l'équilibre entre la turbine et le compresseur en soutirant de l'air en sortie du compresseur dans les cas où le fonctionnement du groupe est limité par la turbine, ou en injectant un débit supplémentaire de gaz dans la ligne de combustion dans les cas où le fonctionnement du groupe est limité par le compresseur, ce qui permet ainsi de compenser les déséquilibres entre ces deux éléments résultant soit de la conception de ces derniers, soit des variations de carburant, soit dans tous les cas, des variations des conditions climatiques, et d'utiliser ainsi la turbine à sa puissance maximum.

La présente invention a donc pour objet un procédé de mise en oeuvre d'un groupe turbine à gaz permettant d'utiliser la turbine à gaz à sa puissance maximum quelles que soient les conditions d'utilisation.

Pour ce faire, selon une caractéristique de l'invention, on associe fonctionnellement le groupe turbine à gaz à une unité de séparation de gaz de l'air et on maintient les conditions de fonctionnement de la turbine sensiblement au voisinage de celles de production de puissance maximum en sélectionnant, avec l'aide de l'unité de séparation, les paramètres de mélange de gaz de l'air introduit dans la chambre de combustion.

Selon des caractéristiques de l'invention, la sélection est effectuée en fonction des conditions climatiques, en fonction du carburant utilisé et/ou en fonction des caractéristiques aérodynamiques du couple compresseur/turbine du groupe turbine à gaz.

Selon d'autres caractéristiques de l'invention, la sélection est effectuée en soutirant un débit d'air comprimé en sortie du compresseur du groupe turbine à gaz pour alimenter au moins partiellement l'unité de séparation d'air ou en introduisant de l'azote impur produit par l'unité de séparation d'air dans le mélange de gaz de l'air fourni à la chambre de combustion.

Avec un tel procédé, la sélection des paramètres du mélange de gaz de l'air s'effectuent en exploitant une unité de séparation de gaz de l'air qui, dans tous les cas, fournit d'autres produits annexes (ou "by-products") vis-à-vis de l'exploitation du groupe turbine à gaz mais présentant en eux-mêmes une valeur ajoutée appréciable, tels que de l'oxygène, de l'azote sensiblement pur, de l'argon et/ou des mixtures krypton-xénon.

La présente invention a pour autre objet de proposer un ensemble combiné de production d'énergie et d'au moins un gaz de l'air permettant une utilisation optimale, pour la production d'énergie, du groupe turbine à gaz tout en fournissant une gamme de gaz de l'air exploités indépendamment de la mise en oeuvre du groupe turbine à gaz.

Pour ce faire, selon une caractéristique de l'invention, un tel ensemble combiné, comprenant un groupe turbine à gaz comportant un premier compresseur accouplé à une turbine et un circuit de combustion entre la sortie du premier compresseur et l'entrée de la turbine, et une unité de séparation d'air comprenant un deuxième compresseur d'air reliée à une entrée d'air d'alimentation de l'unité, une sortie d'azote impur et au moins une autre sortie de gaz de l'air, est caractérisé en ce qu'il comprend des moyens pour relier sélectivement l'entrée d'air de l'unité à la sortie du premier compresseur ou la sortie d'azote impur au circuit de combustion du groupe turbine à gaz.

Ainsi, selon les conditions d'utilisation du groupe turbine à gaz, l'unité de séparation fonctionne en étant alternativement alimentée par son propre compresseur d'air ou au moins partiellement par le compresseur d'air du groupe turbine à gaz pour, notamment selon la saison, fournir un débit additionnel d'azote impur dans la ligne de combustion lorsque l'élément limiteur de fonctionnement du groupe turbine à gaz est le compresseur.

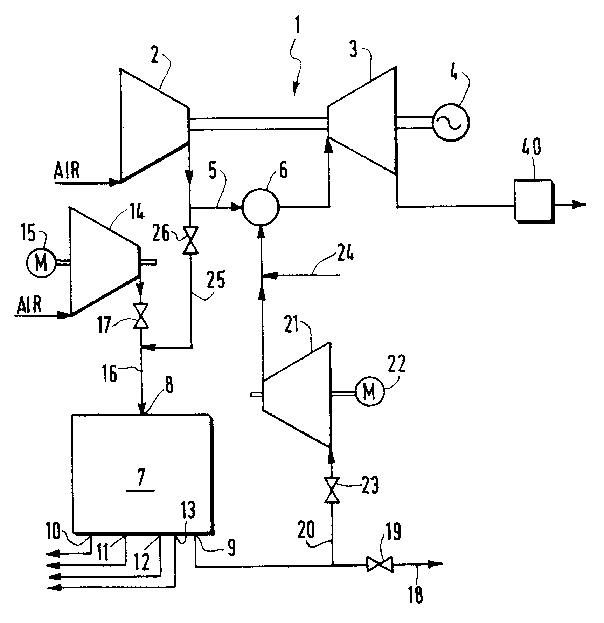

D'autres caractéristiques et avantages de la présente invention ressortiront de la description suivante d'un mode de réalisation, donnée à titre illustratif mais nullement limitatif, faite en relation avec le dessin annexé, sur lequel :
la figure unique représente schématiquement un ensemble combiné de production d'énergie et de gaz de l'air selon l'invention.

Sur la figure unique, on reconnaît un groupe turbine à gaz 1 comprenant classiquement un compresseur multi-étages 2 couplé à une turbine multi-étages 3 entraînant typiquement un alternateur 4, une ligne de combustion 5, comprenant une chambre de combustion 6, reliant la sortie du compresseur 2 à la turbine 3. Les fumées détendues en sortie de la turbine 3 sont évacuées, avantageusement via une chaudière 40 de récupération de la chaleur des fumées pour notamment actionner une turbine à vapeur. L'ensemble comprend également une unité de séparation d'air 7, typiquement une unité cryogénique comprenant au moins une colonne de distillation, comportant une entrée d'air 8 d'alimentation en air comprimé, une sortie d'azote impur 9, au moins l'une des sorties suivantes : une sortie d'oxygène de production 10, une sortie 11 d'azote de production sensiblement pur, une sortie 12 d'argon et, le cas échéant, une sortie 13 d'un mélange de krypton et de xénon. L'unité 7 comporte son propre compresseur d'air 14 entraîné par un moteur 15 et relié à l'entrée d'air 8 par une ligne d'air comprimé 16 comportant une vanne de régulation 17.

Conformément à l'invention, la sortie d'azote impur 9 est reliée à une ligne d'azote impur 18 comportant une vanne 19 en amont de laquelle est dérivée une ligne 20 reliée à la chambre de combustion 6, incorporant un compresseur d'azote 21 entraîné par un moteur 22 et incluant, en amont du compresseur 21, une vanne 23. Typiquement, une canalisation d'amenée de carburant gazeux 24 débouche dans la partie aval de la ligne 20 peu avant la chambre de combustion 6. Le carburant gazeux 24 est typiquement du gaz naturel, mais peut également être un gaz de haut fourneau, un gaz de gazéification de produits carbonés (lignite, résidus pétroliers lourds, biomasse) ou un gaz de Corex obtenu dans les procédés de réduction directe du minerai de fer. Une deuxième ligne 25, comportant une vanne 26, relie par ailleurs la ligne de combustion 5, en amont de la chambre de combustion 6, et la ligne 16, en aval de la vanne 17.

Le fonctionnement de l'ensemble représenté sur la figure unique, pour la mise en oeuvre du procédé selon l'invention, tel que défini plus haut, est le suivant :

### - Mode où les capacités de la turbine dépassent celles du compresseur (par exemple en été ou avec un carburant à bas PCI)

Dans ce cas, la vanne 26 est fermée de façon que tout l'air comprimé sorti du compresseur 2 soit adressé à la chambre de combustion 6. La vanne 17 est ouverte et l'unité 7 étant alimentée uniquement par son compresseur 14, indépendamment du compresseur 2 du groupe turbine à gaz 1. Par contre, la vanne 19 est fermée et la vanne 23 est ouverte et le compresseur 21 est actionné par le moteur 22 pour injecter de l'azote impur disponible à la sortie 9 dans la chambre de combustion 6, mélangé avec le carburant 24, sensiblement à la pression de refoulement du compresseur 2, augmentant ainsi le débit massique de fumées adressé à la turbine 3, sans entraîner de perturbations de la combustion en raison du fait que l'air comprimé fourni par le compresseur 2 est toujours très excédentaire par rapport à la stoéchiométrie, cette injection d'azote refroidissant par ailleurs la combustion, ce qui réduit notablement les oxydes d'azote de combustion.

### - Mode où le fonctionnement optimum du groupe turbine à gaz est limité par la turbine (par exemple avec une température ambiante froide)

Dans ce cas, la vanne 23 est fermée, le compresseur 21 non entraîné et la vanne 19 d'évacuation ouverte. D'autre part, la vanne 26 est ouverte, la vanne 17 étant partiellement ouverte selon le débit susceptible d'être prélevé en sortie du compresseur 2 et se substituant au moins partiellement au débit d'air comprimé normalement fourni par le compresseur 14. La chambre de combustion 6 ne "voit" donc que la partie du débit fourni par le compresseur 2 compatible avec le volume de fumées acceptable par la turbine 3 pour un fonctionnement optimum de cette dernière.

Selon les conditions d'exploitation, et notamment des besoins de fourniture en énergie par le groupe turbine à gaz, les deux modes ci-dessus peuvent être combinés en faveur, cette fois, d'une production optimale de gaz de l'air par l'unité de séparation 7.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Procédé de mise en oeuvre d'un groupe turbine à gaz (1) produisant de l'énergie par combustion d'un carburant gazeux (24) avec un mélange de gaz de l'air, caractérisé en ce qu'on associe fonctionnellement le groupe (1) à une unité de séparation de gaz de l'air (7) produisant au moins deux gaz de l'air (9; 10-18) et en ce qu'on maintient les conditions de fonctionnement de la turbine (3) du groupe sensiblement au voisinage de celles de production de puissance maximum en sélectionnant, avec l'aide de l'unité de séparation (7), les paramètres du mélange de gaz de l'air.

2. Procédé selon la revendication 1, caractérisé en ce que la sélection est effectuée en fonction des conditions climatiques.

3. Procédé selon la revendication 1 ou la revendication 2, caractérisé en ce que la sélection est effectuée en fonction du carburant (24).

4. Procédé selon l'une des revendications 1 à 3, caractérisé en ce que la sélection est effectuée en fonction des caractéristiques aérodynamiques du couple compresseur (2)/turbine (3) du groupe turbine à gaz (1).

5. Procédé selon l'une des revendications précédentes, caractérisé en ce que la sélection est effectuée en soutirant un débit d'air comprimé en sortie du compresseur (2) du groupe turbine à gaz (1) pour alimenter au moins partiellement l'unité (7).

6. Procédé selon l'une des revendications 1 à 4, caractérisé en ce que la sélection est effectuée en introduisant de l'azote impur produit (9) par l'unité (7) dans le mélange de gaz de l'air.

7. Procédé selon la revendication 6, caractérisé en ce que l'azote impur est mélangé avec le carburant (24).

8. Procédé selon l'une des revendications précédentes, caractérisé en ce qu'on exploite indépendamment au moins un gaz de l'air de production produit (10-13) par l'unité (7).

9. Procédé selon la revendication 8, caractérisé en ce que le gaz de l'air de production est l'oxygène (10).

10. Procédé selon l'une des revendications 8 et 9, caractérisé en ce que le gaz de l'air de production est de l'azote sensiblement pur (11).

11. Procédé selon l'une des revendications 8 à 10, caractérisé en ce que le gaz de l'air de production est de l'argon (12).

12. Procédé selon l'une des revendications 8 à 11, caractérisé en ce que le gaz de l'air de production est un mélange krypton-xénon (13).

13. Procédé selon l'une des revendications précédentes, caractérisé en ce que le carburant (24) est du gaz naturel.

14. Procédé selon l'une des revendications 1 à 12, caractérisé en ce que le carburant (24) est du gaz de haut fourneau.

15. Ensemble combiné de production d'énergie et d'au moins un gaz de l'air, comprenant :
- un groupe turbine à gaz (1), comportant un premier compresseur (2) accouplé à une turbine (3) et un circuit de combustion (5) entre la sortie du premier compresseur (2) et l'entrée de la turbine (3) ;
- une unité de séparation d'air (7) comprenant un deuxième compresseur d'air (14) relié à une entrée d'air (8) d'alimentation de l'unité, une sortie (9) d'azote impur et au moins une autre sortie (10-13) de gaz de l'air,
caractérisé en ce qu'il comprend des moyens (25, 26 ; 20, 23) pour relier sélectivement l'entrée d'air (8) à la sortie du premier compresseur (2) ou la sortie d'azote impur (9) au circuit de combustion (5).

16. Ensemble selon la revendication 15, caractérisé en ce qu'il comprend une première (25) et une seconde (16) lignes d'air comprimé reliant l'entrée d'air (8) de l'unité (1) respectivement aux sorties des premier (2) et deuxième (14) compresseurs d'air et pourvues chacune d'un moyen de vanne (26 ; 17).

17. Ensemble selon l'une des revendications 15 et 16, caractérisé en ce qu'il comprend une ligne d'azote impur (20) reliant la sortie d'azote impur (9) de l'unité (7) au circuit de combustion (5) et pourvu d'un moyen de vanne (23).

18. Ensemble selon la revendication 17, caractérisé en ce que la ligne d'azote impur (20) comporte un troisième compresseur (21).

19. Ensemble selon l'une des revendications 17 et 18, caractérisé en ce que la ligne d'azote impur (20) débouche dans la chambre de combustion (6) du groupe turbine à gaz (1).

## Claims

1. Method of operating a gas turbine group (1) producing energy by combustion of a gaseous fuel (24) with a mixture of atmospheric gases, characterized in that the group (1) is functionally associated with an atmospheric gas separation unit (7) producing at least two atmospheric gases (9; 10-18) and in that the operating conditions of the turbine (3) of the group are kept substantially close to those of maximum power production by selecting, with the aid of the separation unit (7), the parameters of the atmospheric gas mixture.

2. Method according to Claim 1, characterized in that the selection is made as a function of climatic conditions.

3. Method according to Claim 1 or Claim 2, characterized in that the selection is made as a function of the fuel (24).

4. Method according to one of Claims 1 to 3, characterized in that the selection is made as a function of the aerodynamic characteristics of the compressor (2)/ turbine (3) pair of the gas turbine group (1).

5. Method according to one of the preceding claims, characterized in that the selection is made by withdrawing a flow of compressed air at the outlet of the compressor (2) of the gas turbine group (1) in order at least partially to supply the unit (7).

6. Method according to one of Claims 1 to 4, characterized in that the selection is made by introducing impure nitrogen produced (9) by the unit (7) into the atmospheric gas mixture.

7. Method according to Claim 6, characterized in that the impure nitrogen is mixed with the fuel (24).

8. Method according to one of the preceding claims, characterized in that at least one production atmospheric gas produced (10-13) by the unit (7) is exploited independently.

9. Method according to Claim 8, characterized in that the production atmospheric gas is oxygen (10).

10. Method according to one of Claims 8 and 9, characterized in that the production atmospheric gas is substantially pure nitrogen (11).

11. Method according to one of Claims 8 to 10, characterized in that the production atmospheric gas is argon (12).

12. Method according to one of Claims 8 to 11, characterized in that the production atmospheric gas is a krypton-xenon mixture (13).

13. Method according to one of the preceding claims, characterized in that the fuel (24) is natural gas.

14. Method according to one of Claims 1 to 12, characterized in that the fuel (24) is blast-furnace gas.

15. Combined assembly for production of energy and of at least one atmospheric gas, comprising:
- a gas turbine group (1) including a first compressor (2) coupled to a turbine (3) and a combustion circuit (5) between the outlet of the first compressor (2) and the inlet of the turbine (3);
- an air separation unit (7) comprising a second air compressor (14) connected to a supply air inlet (8) of the unit, an impure nitrogen outlet (9) and at least one other atmospheric gas outlet (10-13),
characterized in that it comprises means (25, 26; 20, 23) for selectively connecting the air inlet (8) to the outlet of the first compressor (2) or the impure nitrogen outlet (9) to the combustion circuit (5).

16. Assembly according to Claim 15, characterized in that it comprises a first compressed air line (25) and a second compressed air line (16) connecting the air inlet (8) of the unit (1) respectively to the outlets of the first air compressor (2) and second air compressor (14) and each provided with a valve means (26; 17).

17. Assembly according to one of Claims 15 and 16, characterized in that it comprises an impure nitrogen line (20) connecting the impure nitrogen outlet (9) of the unit (7) to the combustion circuit (5) and provided with a valve means (23).

18. Assembly according to Claim 17, characterized in that the impure nitrogen line (20) includes a third compressor (21).

19. Assembly according to one of Claims 17 and 18, characterized in that the impure nitrogen line (20) emerges in the combustion chamber (6) of the gas turbine group (1).

## Patentansprüche

1. Verfahren zur Verwendung einer Gasturbinengruppe (1), die durch Verbrennung eines gasförmigen Brennstoffes (24) mit einem Luftgasgemisch Energie erzeugt, dadurch gekennzeichnet, daß man die Gruppe (1) einer Lufttrennungsanlage (7) zuordnet, die mindestens zwei Luftgase (9; 10-18) erzeugt, und daß man die Betriebsbedingungen der Turbine (3) der Gruppe im wesentlichen in der Nähe derjenigen mit maximaler Leistungserzeugung hält, indem man mit Hilfe der Trennungsanlage (7) die Parameter des Luftgasgemisches auswählt.

2. Verfahren nach Anspruch 1, dadurch gekennzeichnet, daß die Auswahl in Abhängigkeit von den klimatischen Bedingungen getroffen wird.

3. Verfahren nach Anspruch 1 oder 2, dadurch gekennzeichnet, daß die Auswahl in Abhängigkeit von dem Brennstoff (24) getroffen wird.

4. Verfahren nach einem der Ansprüche 1 bis 3, dadurch gekennzeichnet, daß die Auswahl in Abhängigkeit von den aerodynamischen Kenndaten des Kompressor/ Turbinen-Paares (2/3) der Gasturbinengruppe (1) getroffen wird.

5. Verfahren nach einem der vorhergehenden Ansprüche, dadurch gekennzeichnet, daß die Auswahl getroffen wird, indem man einen von dem Kompressor (2) der Gasturbinengruppe (1) austretenden Druckluftdurchsatz abzieht, um die Anlage (7) zumindest teilweise zu versorgen.

6. Verfahren nach einem der Ansprüche 1 bis 4, dadurch gekennzeichnet, daß die Auswahl getroffen wird, indem man mittels der Anlage (7) erzeugten (9) unreinen Stickstoff in das Luftgasgemisch einleitet.

7. Verfahren nach Anspruch 6, dadurch gekennzeichnet, daß der unreine Stickstoffmit dem Brennstoff (24) gemischt wird.

8. Verfahren nach einem der vorhergehenden Ansprüche, dadurch gekennzeichnet, daß man mindestens ein mittels der Anlage (7) erzeugtes (10-13) Produktionsluftgas unabhängig verwertet.

9. Verfahren nach Anspruch 8, dadurch gekennzeichnet, daß das Produktionsluftgas Sauerstoff (10) ist.

10. Verfahren nach einem der Ansprüche 8 und 9, dadurch gekennzeichnet, daß das Produktionsluftgas im wesentlichen reiner Stickstoff (11) ist.

11. Verfahren nach einem der Ansprüche 8 bis 10, dadurch gekennzeichnet, daß das Produktionsluftgas Argon (12) ist.

12. Verfahren nach einem der Ansprüche 8 bis 11, dadurch gekennzeichnet, daß das Produktionsluftgas ein Krypton-Xenon-Gemisch (13) ist.

13. Verfahren nach einem der vorhergehenden Ansprüche, dadurch gekennzeichnet, daß der Brennstoff (24) Erdgas ist.

14. Verfahren nach einem der Ansprüche 1 bis 12, dadurch gekennzeichnet, daß der Brennstoff (24) Hochofengas ist.

15. Kombinierte Anordnung zur Erzeugung von Energie und mindestens einem Luftgas, mit:
- einer Gasturbinengruppe (1), die einen mit einer Turbine (3) gekoppelten ersten Kompressor (2) und einen Brennkreis (5) zwischen dem Ausgang des ersten Kompressors (2) und dem Eingang der Turbine (3) aufweist;
- einer Lufttrennungsanlage (7), die einen mit einem Lufteinlaß (8) zur Versorgung der Anlage verbundenen zweiten Luftkompressor (14), einen Ausgang (9) für unreinen Stickstoff und mindestens einen anderen Ausgang (10-13) für Luftgas aufweist,
dadurch gekennzeichent, daß sie Einrichtungen (25, 26; 20, 23) zum selektiven Verbinden des Lufteinlasses (8) mit dem Ausgang des ersten Kompressors (2) oder des Ausgangs für unreinen Stickstoff (9) mit dem Brennkreis (5) aufweist.

16. Anordnung nach Anspruch 15, dadurch gekennzeichnet, daß sie eine erste (25) und eine zweite (16) Druckluftleitung aufweist, welche den Lufteinlaß (8) der Anlage (1) jeweils mit dem Ausgang des ersten (2) bzw. zweiten (14) Luftkompressors verbindet und welche jeweils mit einer Ventileinrichtung (26; 17) versehen ist.

17. Anordnung nach einem der Ansprüche 15 oder 16, dadurch gekennzeichnet, daß sie eine Leitung (20) für unreinen Stickstoff aufweist, welche den Ausgang für unreinen Stickstoff (9) der Anlage (7) mit dem Brennkreis (5) verbindet und mit einer Ventileinrichtung (23) versehen ist.

18. Anordnung nach Anspruch 17, dadurch gekennzeichnet, daß die Leitung (20) für unreinen Stickstoff einen dritten Kompressor (21) aufweist.

19. Anordnung nach einem der Ansprüche 17 und 18, dadurch gekennzeichnet, daß die Leitung (20) für unreinen Stickstoff in die Brennkammer (6) der Gasturbinengruppe (1) mündet.
